# FASCICULE DE BREVET EUROPEEN

(11) **EP 2 811 708 B1**
(45) Date de publication et mention de la délivrance du brevet: **28.09.2016**
(21) Numéro de dépôt: 13170745.7
(22) Date de dépôt: 06.06.2013
(51) Int. Cl.: H04L 29/06

(54) **Système et méthode pour l'authentification d'un utilisateur**
System und Methode zur Authentifizierung eines Benutzers
System and method for authenticating a user

(43) Date de publication de la demande: 10.12.2014
(73) Titulaire: Nagravision S.A., 1033 Cheseaux-sur-Lausanne (CH)
(72) Inventeur: Aumasson, Jean-Philippe, 1610 Vuibroye (CH)
(74) Mandataire: Leman Consulting S.A.

(56) Documents cités:
- US-A1- 2003 131 264
- US-A1- 2004 123 159
- US-A1- 2007 234 408

## Description

### Introduction

La présente demande concerne les systèmes ou méthodes pour l'authentification d'un utilisateur lorsque celui-ci désire accéder à un service distant.

### Généralités

De nombreux services en ligne exigent une identification et une authentification d'un utilisateur lorsque celui-ci désire accéder à une partie privée de ce service, par exemple accéder à son espace Facebook^{™} ou pouvoir lire ses messages. Pour ce faire, l'utilisateur est requis par le serveur dudit service de donner un identifiant et un mot de passe.

Ces données sont vérifiées avec celles de référence stockées par le serveur d'une part que l'identifiant est bien répertorié dans le serveur et d'autre part que le mot de passe correspond à celui de référence. Une fois ces vérifications faites, le serveur autorise l'accès au service pour ledit utilisateur.

### Etat de la technique

Les solutions actuelles ont déjà pris en compte les risques de stocker ces informations en clair dans une base de données, même si cette base est sécurisée. C'est pourquoi une première approche consiste à exécuter une fonction de hachage (fonction à sens unique) telle que SHA-1 ou MD5 sur l'identifiant et le mot de passe et de stocker ces deux informations sous cette forme: il est à noter que ces fonctions de hachage sont réputées à sens unique, c'est-à-dire qu'il n'est pas possible de calculer la valeur d'origine en disposant de la valeur du hash.

Le document US2007/234408, par exemple, décrit une méthode d'authentification d'un utilisateur au moyen d'une fonction à sens unique et de deux serveurs distincts.

Il s'est avéré néanmoins que lors de vol de données, des outils spécialisés (attaque par force brute, attaque par dictionnaire par exemple) permettaient par essais successifs de retrouver le mot de passe en clair. L'utilisation de fonctions cryptographiques plus coûteuses à évaluer, par exemple le standard NIST PBKDF2, ont rendu ces attaques moins efficaces.

Une autre approche est le stockage de ces données sensibles dans un élément de sécurité matériel sous forme chiffrée. L'imagination et la détermination des pirates est sans limite et même ces éléments de sécurité ne sont pas à l'abri de vol.

Dans ces différentes approches, les données sensibles sont stockées à un seul endroit qui sera donc l'attention des pirates visant à s'approprier de manière illégitime des informations privées des utilisateurs.

Un autre problème que se propose de résoudre la présente invention concerne la mise à jour de la sécurité des mots de passe. En effet, si un serveur souhaite modifier la fonction de hachage pour une nouvelle fonction offrant plus de sécurité, il faut que chaque utilisateur soit averti pour qu'il vienne s'identifier avec son mot de passe, celui-ci étant vérifié grâce à la première fonction de hachage. Puis l'utilisateur est invité à entrer un nouveau mot de passe qui sera encodé par la seconde fonction de hachage puis stocké. Une telle mise à jour est typiquement motivée par la nécessité de s'adapter à la puissance de calcul des attaquants ainsi qu'à celle de l'utilisateur légitime.

### Brève description de l'invention

La présente invention vise deux buts, à savoir d'une part le renforcement de la sécurité pour la protection non seulement du mot de passe mais également de l'identifiant d'un utilisateur; et d'autre part permettre une mise à jour de la sécurité sans devoir faire intervenir l'utilisateur. Ces buts peuvent être poursuivis séparément ou en combinaison.

La présente invention est décrite dans les revendications annexées.

La présente invention est basée sur l'utilisation de deux serveurs, aucun ne disposant de la totalité des informations sur un utilisateur. Le premier serveur comprend une première base de données et le second serveur comprend une seconde base de données.

En particulier, le serveur frontal (ou premier serveur), en communication avec le réseau public, ne dispose pas d'information sensibles pouvant être utiles à un tiers malveillant si d'aventure, ces données étaient piratées.

Le premier serveur stocke dans la première base de données sécurisée un enregistrement par utilisateur, cet enregistrement comprenant selon une première version uniquement le premier cryptogramme H.

Le second serveur stocke dans la seconde base de données sécurisée le paramètre de sécurité R et un chiffrement du triplé identifiant, mot de passe, et paramètre de sécurité.

Il est à noter que la fonction à sens unique est connue uniquement du second serveur, cette fonction pouvant être initialisée par une clé secrète propre au second serveur.

### Brève description des figures

La présente invention sera mieux comprise grâce aux figures annexées dans lesquelles :
- la figure 1 illustre l'étape d'enrôlement,
- la figure 2 illustre l'étape de vérification.

### Description détaillée

Le système de l'invention comprend au moins deux serveurs, le premier serveur S1 (front-end) étant accessible par un ou des utilisateurs et le second serveur S2 (back-end) étant connecté localement au premier serveur S1. La connexion entre le premier serveur et le second serveur est sécurisée, c'est-à-dire que la confidentialité et l'intégrité des données échangées est assurée. Chacun de ces serveurs dispose d'une base de données pour stocker les données servant à l'authentification d'un utilisateur.

Une fois le système mis en place, le second serveur initialise le paramètre de sécurité R qui sera stocké dans la seconde base de données sécurisée dudit serveur. Il est à noter que ce paramètre peut être dépendent de l'application demandée, dans le cas ou le premier serveur propose plus d'un service. Ceci est le cas par exemple pour une banque qui offre un accès de gestion à un compte privé, ou à un compte de trading. Dans ce cas, il est possible que chacun de ces services corresponde à un paramètre de sécurité différent.

Afin de permettre au second serveur de sélectionner le paramètre correct, le premier message envoyé du premier serveur au second serveur comprendra aussi le type de service auquel l'authentification est requise dans le cas ou plusieurs services sont contrôlés par le second serveur.

### Enrôlement

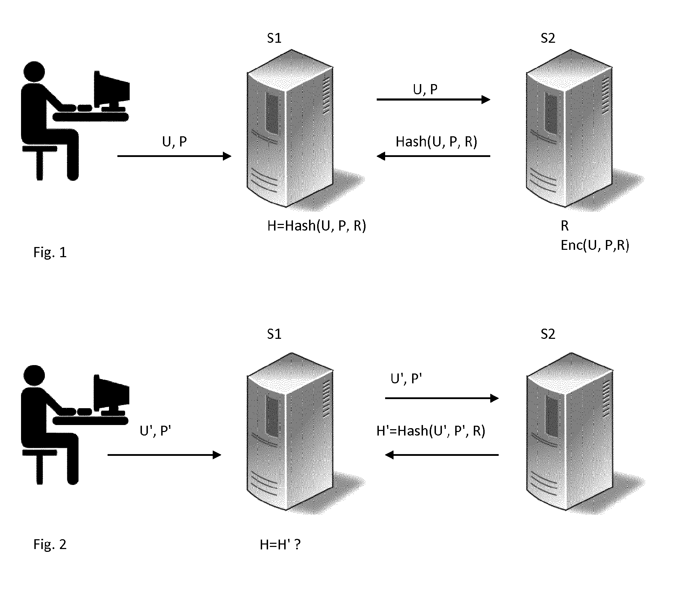

La première étape est l'inscription d'un utilisateur dans le système tel qu'illustré par la figure 1. D'une manière conventionnelle, cet utilisateur est invité à introduire un identifiant de référence U et un mot de passe de référence P dans une interface du premier serveur S1.

Ces deux informations sont transmises au second serveur S2 via la connexion sécurisée. Le premier serveur peut ajouter des informations complémentaires telles que le type de service et/ou un identifiant système ID alloué à cet utilisateur pour le service proposé. L'identifiant de référence U est celui connu de l'utilisateur alors que l'identifiant système ID est un nombre ou suite alphanumérique propre au système proposant le service. L'identifiant système est unique par utilisateur.

Une fois ces informations reçues par le second serveur S2, celui-ci détermine le paramètre de sécurité R et exécute la fonction à sens unique Hash sur l'identifiant de référence U et le mot de passe P. Le résultat est un cryptogramme H = Hash(U, P,R). Ce résultat H est transmis au premier serveur S1 qui va le stocker dans sa base de données sécurisée.

Le second serveur S2 chiffre également l'identifiant de référence U et le mot de passe P avec une méthode de chiffrement asymétrique prenant comme argument une clé publique stockée par ledit serveur S2, la clé privée correspondante étant stockée de manière sécurisée en dehors du réseau (par exemple dans un coffre physique). Selon une variante, l'ensemble chiffré peut comprendre le paramètre de sécurité R permettant ainsi de savoir quel paramètre a été utilisé pour cet utilisateur.

Ladite méthode de chiffrement asymétrique peut être par exemple basée sur RSA, ou sur des courbes elliptiques.

Comme il a été dit plus haut, le premier serveur S1 stocke le premier cryptogramme H dans sa base de données sécurisée. Ainsi lors de la vérification, le premier serveur, après avoir reçu le second cryptogramme H' du second serveur, va balayer sa base de données afin de déterminer si un premier cryptogramme H a la même valeur que le second cryptogramme H' et ainsi déterminer si l'authentification a réussi.

Dans cette forme de réalisation, il est possible d'ajouter une vérification avant l'acceptation des données choisies par l'utilisateur à savoir vérifier que le premier cryptogramme H de cet utilisateur n'existe pas déjà dans la base de données. Dans ce cas, l'utilisateur est prié de choisir un autre mot de passe par exemple.

Selon une variante de l'invention, il est possible de stocker pour chaque premier cryptogramme H l'identifiant de référence U ou un dérivé U" de cet identifiant de référence. Les autres informations en particulier le mot de passe de référence P sont effacées dès la terminaison de la phase d'enrôlement.

Le dérivé U" de l'identifiant courant U est une valeur résultant d'une opération cryptographique sur l'identifiant courant U. Il peut s'agir d'une fonction d'encryption F ou d'une fonction de hachage H1. Dans ce deuxième cas, du fait que l'opération de hachage effectuée par le second serveur n'est pas connue du premier serveur, il s'agira d'une fonction de type de hachage différente.

### Authentification

Cette étape est illustrée par la figure 2. Dans un second temps, l'utilisateur se connecte au premier serveur S1 pour accéder au service souhaité. Le premier serveur S1 reçoit l'identifiant courant U' et le mot de passe courant P'. Le premier serveur S1 transmet ces informations au second serveur S2 de manière sécurisée. Une fois reçu par le second serveur, ce dernier exécute la fonction à sens unique Hash sur l'identifiant courant U' et le mot de passe P' ainsi que le paramètre de sécurité R pour obtenir un second cryptogramme H'. Il renvoie ce cryptogramme H' au premier serveur S1. Ce dernier recherche dans sa base de donnée s'il existe un premier cryptogramme égal au second cryptogramme, et génère un message d'erreur si et seulement si il ne trouve aucune trace de ce cryptogramme H'. Dans le cas contraire, le premier serveur S1 peut autoriser l'accès au service souhaité.

Dans le cas où seuls les cryptogrammes H des utilisateurs ayant passés la phase d'enrôlement sont stockés dans le premier serveur S1, cette étape de vérification d'existence d'une entrée dans sa base de données ne peut se faire avant la transmission des données au second serveur. En effet, le premier serveur S1 ne peut pas déterminer si l'identifiant courant a été enregistré dans le système. Les mêmes opérations étant réalisées pour un identifiant enregistré qu'un identifiant non enregistré, il est impossible d'utiliser le système comme un oracle pour déterminer si un identifiant a été enregistré.

Si le premier serveur est connecté à plusieurs ordinateurs pour la mise en oeuvre du service, le premier serveur va transmettre l'identifiant courant U' (qui est le même que l'identifiant de référence U' puisque la comparaison est positive) aux ordinateurs avec une information d'authentification positive. Dans le cas où le pool des ordinateurs fonctionne avec un identifiant système unique ID, le premier serveur S1 a une base de données organisée en collection d'enregistrement, chaque utilisateur représentant un enregistrement. Un enregistrement comprend un premier cryptogramme H et un identifiant système ID correspondant. En cas de vérification positive, le premier serveur envoie à un serveur de service l'identifiant système (ID) avec un message attestant de la vérification positive de l'identifiant courant (U').

Dans la variante dans laquelle le premier serveur conserve avec le premier cryptogramme de référence H, l'identifiant de référence U (ou le dérivé de l'identifiant de référence U"), le balayage de la base de données du premier serveur n'est pas nécessaire car le cryptogramme de référence H peut être retrouvé directement. Si la base de donnée sécurisée du premier serveur contient le dérivé U" de l'identifiant de référence U, le premier serveur va exécuter l'opération cryptographique sur l'identifiant courant U' pour obtenir le dérivé de l'identifiant courant et se servir de cette donnée pour retrouver le cryptogramme de référence H. La comparaison peut alors se faire entre le premier cryptogramme de référence H et le second cryptogramme courant H' reçu du second serveur S2.

Dans le cas où il ne trouve aucune trace de cet identifiant, il génère un message d'erreur. Il est à noter que cette étape de vérification d'existence d'une entrée dans sa base de données peut se faire avant la transmission des données au second serveur. En effet, si l'identifiant courant n'est pas connu du premier serveur il n'est pas nécessaire de vérifier le mot de passe qui a été introduit par l'utilisateur.

### Mise à jour des mots de passe

Une particularité du système est de pouvoir permettre la mise à jour des moyens de sécurité sans modifier la valeur du mot de passe. Il est par exemple souhaité de changer le paramètre de sécurité R ou la fonction à sens unique Hash.

C'est à cet effet que le second serveur S2 dispose de l'identifiant de référence U et du mot de passe P sous forme chiffrée. La clé privée correspondant à la clé asymétrique utilisée pour le chiffrement est extraite de l'endroit sécurisé ou elle était stockée et mise à disposition du second serveur S2.

La procédure est la suivante :
- le second serveur déchiffre un couple identifiant/mot de passe et calcule le premier cryptogramme tel que lors de la phase d'enrôlement. De plus, il calcule un nouveau cryptogramme de référence H" sur la base d'une nouvelle valeur du paramètre de sécurité R' ou d'une nouvelle fonction à sens unique voire une combinaison des deux. Ce nouveau cryptogramme H" est envoyé au premier serveur S1 avec le premier cryptogramme H. Dans le cas ou le paramètre de sécurité R était inclus avec le couple identifiant/mot de passe, il est également déchiffré.
- le serveur S2 chiffre également l'identifiant de référence U et le mot de passe P selon les nouveaux paramètres (fonction à sens unique et/ou paramètre de sécurité) avec la méthode de chiffrement asymétrique prenant comme argument une clé publique stockée dudit serveur S2, la clé privée correspondante étant stockée de manière sécurisée en dehors du réseau (par exemple dans un coffre physique). Selon une variante, l'ensemble chiffré peut comprendre le paramètre de sécurité R permettant ainsi de savoir quel paramètre a été utilisé pour cet utilisateur. Ces nouvelles données chiffrées sont stockées dans la base de données du second serveur S2.
- à la réception des deux cryptogrammes, le premier serveur S1 recherche le cryptogramme de référence H stocké dans sa base de données et le remplace par le nouveau cryptogramme H". Ainsi, les moyens de sécurité peuvent évoluer sans que les utilisateurs ne soient sollicités à recommencer l'introduction d'un mot de passe.

### Paramètre de sécurité

Plusieurs versions peuvent être prévues dans la cadre de la présente invention pour le paramètre de sécurité R. Comme indiqué plus haut, il peut s'agir d'un paramètre qui est propre au second serveur S2 et est donc stocké dans sa mémoire sécurisée. Il est utilisé pour tous les calculs du cryptogramme H, H'.

Le but principal du paramètre de sécurité R est d'adapter le coût de calcul de la fonction Hash à la technologie des attaquants ainsi qu'à celle du serveur. Par exemple, et respectivement, si une nouvelle méthode d'attaque par dictionnaire est découverte, ou si le matériel du serveur S2 est mis à jour avec un processeur plus puissant. Le coût de calcul concerne par exemple le nombre d'opérations arithmétiques ou la capacité de stockage (mémoire) nécessaires à l'évaluation de la fonction.

Selon une variante, ce paramètre peut varier en fonction du type de service auquel requiert l'utilisateur et une information indiquant le type de service Sn accompagne le couple identifiant / mot de passe qui sont transmis au second serveur par le premier serveur. Ceci permet de retrouver le paramètre de sécurité propre à ce service (R1, R2 ... Rn) dans la mémoire sécurisée du second serveur servant à calculer le cryptogramme.

Selon une autre variante, le paramètre de sécurité R est propre à un identifiant de référence Un et donc propre à un utilisateur. Lors de la phase d'enrôlement, un paramètre Rn est généré par une fonction aléatoire par le second serveur S2 dès la réception du couple identifiant/mot de passe. Il est alors nécessaire que le second serveur S2 puisse retrouver le paramètre de sécurité Rn lors de la phase d'authentification. A cet effet, le second serveur va mémoriser le paramètre de sécurité Rn propre à un identifiant Un dans sa base de données.

Il peut bien entendu stocker simplement le couple Un, Rn dans une mémoire sécurisée. Il est néanmoins préférable que l'identifiant Un ne soit pas stocké en clair et donc une fonction à sens unique H' est effectuée sur l'identifiant Un pour obtenir un cryptogramme H'(Un). La mémoire sécurisée du second serveur stockera le couple H'(Un), Rn.

Même si ces données devaient être extraites de la mémoire par une personne malveillante, il ne sera pas possible de retrouver la valeur de l'identifiant Un.

Lors de la phase d'authentification, le second serveur, une fois qu'il a reçu le couple identifiant/mot de passe courant du premier serveur, exécute la fonction à sens unique H' sur l'identifiant courant U'. Il pourra ainsi retrouver dans sa base de données le paramètre de sécurité Rn relatif à cet identifiant et calculer le cryptogramme C'.

### Fonction à sens unique

Il existe plusieurs types de fonction à sens unique. On nomme fonction de hachage une fonction particulière qui, à partir d'une donnée fournie en entrée, calcule une empreinte servant à identifier rapidement, bien qu'incomplètement, la donnée initiale. Les fonctions de hachage sont communément utilisées pour l'implémentation de structures de données et de protocoles cryptographiques.

Un mot de passe ne doit pas être stocké en clair sur une machine pour des raisons de sécurité. Seul le résultat du hachage du mot de passe est donc stocké. Pour identifier un utilisateur, l'ordinateur compare l'empreinte du mot de passe d'origine (stocké) avec l'empreinte du mot de passe demandé. Toutefois, cette manière de faire n'est pas complètement satisfaisante. Si deux utilisateurs décident d'utiliser le même mot de passe alors le condensé obtenu sera identique. Cette faille est potentiellement utilisable par trois méthodes :
attaque par dictionnaire
attaque par force brute
attaque par table arc-en-ciel

Lors d'une attaque par dictionnaire, on pourrait raisonnablement déduire que le mot de passe choisi par les deux utilisateurs est relativement facile à mémoriser.

Pour contrer ce type d'attaque, on ajoute une composante aléatoire (paramètre de sécurité R) lors de la génération initiale de l'empreinte. Cette composante, aussi appelée « sel », est souvent stockée en clair. Le mot de passe est ensuite mélangé avec le paramètre de sécurité R, cette étape varie selon le système employé. Une méthode simple est de concaténer le mot de passe avec le paramètre de sécurité R. Dans le cas où le paramètre de sécurité R n'est pas identique pour deux utilisateurs, on obtiendra deux signatures différentes avec le même mot de passe. Cela réduit fortement la marge d'une attaque via une table arc-en-ciel, mais ne prémunit pas contre les attaques par dictionnaire ou force brute.

Les algorithmes SHA-1 (Secure Hash Algorithm 1 : 160 bits) et MD5 (Message-Digest algorithm 5, 128 bits, plus ancien et moins sûr) sont des fonctions de hachage utilisées fréquemment. Les standard SHA-2 et SHA-3 (224, 256, 384, ou 512 bits) sont disponibles pour remplacer SHA-1.

Il existe aussi des fonctions de hachage dépendant d'une clé. Ceci est le cas par exemple de l'algorithme HMAC-SHA-1, qui utilise SHA-1 dans la construction HMAC pour accepter une clé comme paramètre. Le paramètre de sécurité R peut jouer le rôle de clé dans ce type de fonction dépendant d'une clé.

D'autres algorithmes cryptographiques optimisés pour les mots de passe tels que bcrypt ou scrypt peuvent être utilisés. bcrypt est une fonction cryptographique créé par Niels Provos et David Mazières et est basé sur l'algorithme de chiffrement Blowfish. En plus de l'utilisation d'un paramètre de sécurité pour se protéger des attaques par table arc-en-ciel (rainbow table), bcrypt est une fonction adaptative, c'est-à-dire que l'on peut augmenter le nombre d'itérations pour le rendre plus lent. Ainsi il continue à être résistant aux attaques par recherche exhaustive malgré l'augmentation de la puissance de calcul.

## Revendications

1. Méthode d'authentification d'un utilisateur mettant en oeuvre un premier serveur (S1) connecté à un réseau public et un second serveur (S2), connecté au premier serveur (S1) mais non connecté au réseau public, cette méthode comprenant une étape d'enrôlement comprenant :
- réception par le premier serveur (S1) d'un identifiant de référence (U) et d'un mot de passe de référence (P),
- transmission de l'identifiant de référence (U) et du mot de passe de référence (P) au second serveur (S2),
- chargement d'un paramètre de sécurité (R) par le second serveur (S2),
- calcul d'un premier cryptogramme (H) par une fonction à sens unique (Hash) sur l'identifiant de référence (U), le mot de passe de référence (P), et le paramètre de sécurité (R) par le second serveur (S2),
- chiffrement d'au moins l'identifiant de référence (U) et le mot de passe de référence (P) utilisant une méthode de chiffrement asymétrique prenant comme argument une clé publique, et stockage des données chiffrées par le second serveur (S2),
- renvoi au premier serveur du premier cryptogramme (H) et stockage dudit cryptogramme par le premier serveur (S1), et une étape de vérification d'un utilisateur comprenant :
- réception par le premier serveur (S1) de l'identifiant courant (U') et du mot de passe courant (P'),
- transmission de l'identifiant courant (U') et du mot de passe courant (P') au second serveur (S2),
- calcul d'un second cryptogramme (H') par la fonction à sens unique (Hash) sur l'identifiant courant (U'), le mot de passe courant (P') et le paramètre de sécurité (R) par le second serveur (S2),
- renvoi au premier serveur du second cryptogramme (H') et vérification que le second cryptogramme (H') est inclus dans sa base de données, dans la négative, générer un message d'erreur.

2. Méthode selon la revendication 1, **caractérisée en ce que** le second serveur (S2) inclut le paramètre de sécurité (R) dans le chiffrement de l'identifiant de référence (U) et du mot de passe (P).

3. Méthode selon la revendication 1 ou 2, **caractérisée en ce que** la vérification que le second cryptogramme (H') est inclus dans sa base de données comprend une étape de balayage de la base de données pour trouver un premier cryptogramme (H) identique au second cryptogramme (H').

4. Méthode selon la revendication 1 ou 2, **caractérisée en ce que** le premier serveur (S1), lors de l'enrôlement, stocke un enregistrement comprenant le premier cryptogramme (H) et l'identifiant de référence (U) ou un dérivé de l'identifiant de référence (U") et que la vérification que le second cryptogramme (H') est inclus dans sa base de données comprend une étape préalable de détermination de l'enregistrement correspondant à l'identifiant courant (U') reçu et du cryptogramme de référence (H) associé audit identifiant courant (U').

5. Méthode selon la revendication 1 ou 2, **caractérisée en ce que** le premier serveur (S1), lors de l'enrôlement, stocke un enregistrement comprenant le premier cryptogramme (H) et un identifiant système (ID) et **en ce que** en cas de vérification positive, envoi à un serveur de service l'identifiant de système (ID) avec un message attestant de la vérification positive de l'identifiant courant (**U'**).

6. Méthode selon l'une des revendications 1 à 5, **caractérisée en ce qu'**elle comprend une étape de renouvellement des cryptogrammes de référence **(H) stockés dans le premier serveur**, par l'utilisation d'une nouvelle fonction à sens unique et/ou un nouveau paramètre de sécurité (R') comprenant les étapes :
- obtention par le second serveur (S2) de la clé privée correspondant à la clé publique,
- déchiffrement de l'identifiant de référence (U) et du mot de passe (P) **au moyen de la clé privée,**
- calcul du premier cryptogramme (H) par la fonction à sens unique (Hash) sur l'identifiant de référence (U), le mot de passe de référence (P), et le paramètre de sécurité (R) par le second serveur (S2),
- calcul d'un nouveau cryptogramme (H") par la nouvelle fonction à sens unique sur l'identifiant de référence (U), le mot de passe de référence (P), et le nouveau paramètre de sécurité **(R')** par le second serveur (S2),
- envoi du premier cryptogramme (H) et du nouveau cryptogramme (H") au premier serveur (S1),
- remplacement par le premier serveur (S1) du premier cryptogramme (H) par le nouveau cryptogramme (H").

7. Méthode selon l'une des revendications 1 à 6, **caractérisée en ce que** la communication entre le premier serveur (S1) et le second serveur (S2) est chiffrée.

8. Système d'authentification d'un utilisateur comprenant un premier serveur (S1) connecté à un réseau public comprenant une première base de données et un second serveur (S2) comprenant une seconde base de données, ledit second serveur (S2) étant connecté au premier serveur (S1) mais non connecté au réseau public, le premier serveur (S1) comprenant des moyens pour :
- recevoir un identifiant de référence (U) et un mot de passe de référence (P),
- transmettre l'identifiant de référence (U) et du mot de passe de référence (P) au second serveur (S2),
- recevoir et stocker dans la première base de données un premier cryptogramme (H) relatif audits identifiant de référence (U) et mot de passe de référence (P),
- recevoir un identifiant courant (U') et un mot de passe courant (P'),
- transmettre l'identifiant courant (U') et un mot de passe courant (P') au second serveur (S2),
- recevoir un second cryptogramme (H') relatif audits identifiant courant (U') et un mot de passe courant (P'),
- vérifier dans la première base de donnée la présence d'un desdits premiers cryptogrammes (H) de même valeur que le second cryptogramme (H'), et dans le cas positif,
- envoi d'un message attestant de la vérification positive, le second serveur (S2) comprenant des moyens pour :
- recevoir l'identifiant de référence (U) et le mot de passe de référence (P) du premier serveur (S1),
- charger un paramètre de sécurité (R),
- calculer le premier cryptogramme (H) par une fonction à sens unique sur l'identifiant de référence (U), le mot de passe de référence (P), et le paramètre de sécurité (R),
- chiffrer l'identifiant de référence (U) et le mot de passe **de référence** (P) utilisant une méthode de chiffrement asymétrique prenant comme argument une clé publique, et stocker ces données chiffrées dans la seconde base de données,
- renvoyer au premier serveur le premier cryptogramme (H),
- recevoir l'identifiant courant (U') et le mot de passe courant (P') du premier serveur (S1),
- charger le paramètre de sécurité (R),
- calculer le second cryptogramme **(H')** par la fonction à sens unique sur l'identifiant courant (U'), le mot de passe courant (P') et le paramètre de sécurité (R),
- renvoyer au premier serveur **(S1)** le second cryptogramme **(H').**

## Patentansprüche

1. Authentifizierungsverfahren eines Nutzers durch Verwendung eines ersten Servers (S1), der mit einem öffentliche Netz verbunden ist, und eines zweiten Servers (S2), der mit dem ersten Server (S1), aber nicht mit dem öffentlichen Netz verbunden ist, wobei dieses Verfahren eine Erfassungsphase umfasst, die folgendes umfasst:
- Empfang, durch den ersten Server (S1), einer Bezugskennung (U) und eines Bezugskennworts (P),
- Übertragung der Bezugskennung (U) und des Bezugskennworts (P) an den zweiten Server (S2),
- Laden eines Sicherheitsparameters (R) durch den zweiten Server (S2),
- Berechnung eines ersten Kryptogramms (H) durch eine unidirektionale Funktion (Hash) über die Bezugskennung (U), das Bezugskennwort (P) und den Sicherheitsparameter (R) durch den zweiten Server (S2),
- Verschlüsselung mindestens der Bezugskennung (U) und des Bezugskennworts (P) unter Benutzung eines asymmetrischen Verschlüsselungsverfahrens, das als Argument einen öffentlichen Schlüssel nimmt, sowie Speicherung der verschlüsselten Daten durch den zweiten Server (S2),
- Weiterleitung des ersten Kryptogramms (H) an den ersten Server und Speicherung des genannten Kryptogramms durch den ersten Server (S1),
sowie eine Phase der Prüfung eines Nutzers, die folgendes umfasst:
- Empfang, durch den ersten Server (S1), der aktuellen Kennung (U') und des aktuellen Kennworts (P'),
- Übertragung der aktuellen Kennung (U') und des aktuellen Kennworts (P') an den zweiten Server (S2),
- Berechnung eines zweiten Kryptogramms (H') durch die unidirektionale Funktion (Hash) über die aktuelle Kennung
(U'), das aktuelle Kennwort (P') und den Sicherheitsparameter (R) durch den zweiten Server (S2),
- Weiterleitung des zweiten Kryptogramms (H') zum ersten Server und Prüfung, ob das zweite Kryptogramm (H') in seiner Datenbank enthalten ist, falls nicht, Erzeugen einer Fehlermeldung.

2. Verfahren nach Anspruch 1, **gekennzeichnet dadurch, dass** der zweite Server (S2) den Sicherheitsparameter (R) bei der Verschlüsselung der Bezugskennung (U) und des Kennworts (P) miteinschließt.

3. Verfahren nach Anspruch 1 oder 2, **gekennzeichnet dadurch, dass** die Prüfung, ob das zweite Kryptogramm (H') in seiner Datenbank enthalten ist, eine Abtastungsphase der Datenbank umfasst, um ein erstes Kryptogramm (H) zu finden, das identisch mit dem zweiten Kryptogramm (H') ist.

4. Verfahren nach Anspruch 1 oder 2, **gekennzeichnet dadurch, dass** der erste Server (S1) bei der Erfassung eine Registrierung speichert, die das erste Kryptogramm (H) und die Bezugskennung (U) umfasst oder ein Derivat der Bezugskennung (U'), und dass die Prüfung, ob das zweite Kryptogramm (H') in seiner Datenbank enthalten ist, eine vorhergehende Phase der Ermittlung der Registrierung umfasst, die der empfangenen aktuellen Kennung (U') entspricht, und des Bezugskryptogramms (H), das mit der aktuellen Kennung (U) verbunden ist.

5. Verfahren nach Anspruch 1 oder 2, **gekennzeichnet dadurch, dass** der erste Server (S1) bei der Erfassung eine Registrierung speichert, die das erste Kryptogramm (H) und eine Systemkennung (ID) umfasst, sowie dadurch, dass bei positiver Prüfung die Systemkennung (ID) an einen Dienstserver geschickt wird, mit einer Nachricht, die die positive Prüfung der aktuellen Kennung (U') bescheinigt.

6. Verfahren nach einem der Ansprüche 1 bis 5, **dadurch gekennzeichnet, dass** es eine Phase der Erneuerung der Bezugskryptogramme (H) umfasst, die in dem ersten Server gespeichert sind, durch den Einsatz einer neuen unidirektionalen Funktion und/oder eines neuen Sicherheitsparameters (R') mit folgenden Phasen:
- Erhalt, durch den zweiten Server (S2), des privaten Schlüssels, der dem öffentlichen Schlüssel entspricht,
- Entschlüsselung der Bezugskennung (U) und des Kennworts (P) mittels des privaten Schlüssels,
- Berechnung des ersten Kryptogramms (H) durch die unidirektionale Funktion (Hash) über die Bezugskennung (U), das Bezugskennwort (P) und den Sicherheitsparameter (R) durch den zweiten Server (S2),
- Berechnung eines neuen Kryptogramms (H") durch die neue unidirektionale Funktion über die Bezugskennung (U), das Bezugskennwort (P) und den neuen Sicherheitsparameter (R') durch den zweiten Server (S2),
- Sendung des ersten Kryptogramms (H) und des neuen Kryptogramms (H") an den ersten Server (S1),
- Ersetzen, durch den ersten Server (S1), des ersten Kryptogramms (H) durch das neue Kryptogramm (H").

7. Verfahren nach einem der Ansprüche 1 bis 6, **gekennzeichnet dadurch, dass** die Kommunikation zwischen dem ersten Server (S1) und dem zweiten Server (S2) verschlüsselt ist.

8. Authentifizierungssystem eines Nutzers mit einem ersten Server (S1), der mit einem öffentliche Netz verbunden ist, das eine erste Datenbank umfasst, und einem zweiten Server (S2), der eine zweite Datenbank umfasst, wobei der zweite Server (S2) mit dem ersten Server (S1) verbunden ist, aber nicht mit dem öffentliche Netz, wobei der erste Server (S1) Mittel umfasst, um:
- eine Bezugskennung (U) und ein Bezugskennwort (P) zu empfangen,
- die Bezugskennung (U) und das Bezugskennwort (P) an den zweiten Server (S2) zu übertragen,
- in der ersten Datenbank ein erstes Kryptogramm (H) zu der genannten Bezugskennung (U) und zu dem Bezugskennwort (P) zu empfangen und zu speichern,
- eine aktuelle Kennung (U') und ein aktuelles Kennwort (P') zu empfangen,
- die aktuelle Kennung (U') und ein aktuelles Kennwort (P') an den zweiten Server (S2) zu übertragen,
- ein zweites Kryptogramm (H') bezüglich der aktuellen Kennung (U') und ein aktuelles Kennwort (P') zu empfangen,
- in der ersten Datenbank das Vorhandensein eines der genannten ersten Kryptogramme (H) vom selben Wert wie das zweite Kryptogramm (H') zu überprüfen, und im positiven Fall,
- eine Nachricht zu senden, die die positive Prüfung bescheinigt,
wobei der zweite Server (S2) Mittel umfasst, um:
- die Bezugskennung (U) und das Bezugskennwort (P) des ersten Servers (S1) zu empfangen,
- einen Sicherheitsparameter (R) zu laden,
- das erste Kryptogramm (H) durch eine unidirektionale Funktion über die Bezugskennung (U), das Bezugskennwort (P) und den Sicherheitsparameter (R) zu berechnen,
- die Bezugskennung (U) und das Bezugskennwort (P) unter Benutzung eines asymmetrischen Verschlüsselungsverfahrens zu chiffrieren, das als Argument einen öffentlichen Schlüssel nimmt, und diese verschlüsselten Daten in der zweiten Datenbank zu speichern,
- an den ersten Server das erste Kryptogramm (H) zurückzusenden,
- die aktuelle Kennung (U') und das aktuelle Kennwort (P') vom ersten Server (S1) zu empfangen,
- den Sicherheitsparameter (R) zu laden,
- das zweite Kryptogramm (H') durch die unidirektionale Funktion über die aktuelle Kennung (U'), das aktuelle Kennwort (P') und den Sicherheitsparameter (R) zu berechnen,
- an den ersten Server (S1) das zweite Kryptogramm (H') zurückzusenden.

## Claims

1. Method for user authentication by implementing a first server (S1) connected to a public network and a second server (S2), connected to the first server (S1) but no connected to the public network, this method comprising an enrolment step comprising:
- receiving by the first server (S1) a reference identifier (U) and a reference password (P),
- transmitting the reference identifier (U) and the reference password (P) to the second server (S2),
- loading a security parameter (R) by the second server (S2),
- calculating a first cryptogram (H) by a one-way function (Hash) on the reference identifier (U), the reference password (P), and the security parameter (R) by the second server (S2),
- encrypting at least the reference identifier (U) and the password (P) by using an asymmetrical encryption method by taking a public key as an argument, and storing the coded data by the second server (S2),
- returning the first cryptogram (H) to the first server of and storing said cryptogram by the first server (S1),
and a verification step of a user comprising:
- receiving by the first server (S1) the current identifier (U') and the current password (P'),
- transmitting the current identifier (U') and the current password (P') to the second server (S2),
- calculating a second cryptogram (H') by the one-way function (Hash) on the current identifier (U'), the current password (P') and the security parameter (R) by the second server (S2),
- return of the second cryptogram (H') to the first server and verification that the second cryptogram (H') is included in its database, if not, generating an error message.

2. Method according to claim 1, **characterized in that** the second server (S2) includes the security parameter (R) in the encryption of the reference identifier (U) and the password (P).

3. Method according to claim 1 or 2, **characterized in that** the verification that second cryptogram (H') is included in its database comprises a scanning step of the database in order to find a first cryptogram (H) identical to the second cryptogram (H').

4. Method according to claim 1 or 2, **characterized in that** the first server (S1), during the enrolment, stores a record comprising the first cryptogram (H) and the referred identifier (U) or a derivative of the referred identifier (U'), and **in that** the verification that the second cryptogram (H') is included in its database, comprises a previous step of record determination corresponding to the received current identifier (U') and of the referred cryptogram (H) associated to said current identifier (U).

5. Method according to claim 1 or 2, **characterized in that** the first server (S1), during the enrolment, stores a record comprising the first cryptogram (H) and a system identifier (ID) and **in that** in case of positive verification, sends to a service server the system identifier (ID) with a message certifying the positive verification of the current identifier(U').

6. Method according any of claims 1 to 5, **characterized in that** it comprises a renewal step of the reference cryptograms (H), stored in the first server, by using a new one-way function and/or a new security parameter (R') comprising the steps of:
- obtaining by the second server (S2) the private key corresponding to the public key,
- decrypting the reference identifier (U) and of the password (P), by means of the private key
- calculating the first cryptogram (H) by the one-way function (Hash) on the reference identifier (U), the reference password (P), and the security parameter (R) by the second server (S2),
- calculating a new cryptogram (H") by the new one-way function on the reference identifier (U), the reference password (P), and the new security parameter (R') by the second server (S2),
- sending the first cryptogram (H) and the new cryptogram (H") to the first server (S1),
- replacing the first server (S1) of the first cryptogram (H) with the new cryptogram (H").

7. Method according to any of claims 1 to 6, **characterized in that** the communication between the first server (S1) and the second server (S2) is encrypted.

8. System for user authentication comprising a first server (S1) connected to a public network comprising a first database and a second server (S2) comprising a second database, said second server (S2) being connected to the first server (S1) but not connected to the public network, the first server (S1) comprising means for:
- receiving a reference identifier (U) and a reference password (P),
- transmitting the reference identifier (U) and the reference password (P) to the second server (S2),
- receiving and storing in the first database a first cryptogram (H) relative to said reference identifier(U) and said reference password (P),
- receiving a current identifier (U') and a current password (P'),
- transmitting the current identifier (U') and a current password (P') to the second server (S2),
- receiving a second cryptogram (H') relative to said current identifier (U') and a current password (P'),
- verifying in the first database the presence of one of said first cryptograms (H) of same value as the second cryptogram (H'), and in the positive case,
- sending a message confirming the positive verification,
the second server (S2) comprising means for:
- receiving the reference identifier (U) and the reference password (P) from the first server (S1),
- loading a security parameter (R),
- calculating the first cryptogram (H) by a one-way function on the reference identifier (U), the reference password (P), and the security parameter (R),
- encrypting the reference identifier (U) and the reference password (P) using an asymmetrical encryption method by taking a public key as an argument, and storing these encrypted data in the second database,
- returning the first cryptogram (H) to the first server,
- receiving the current identifier (U') and the current password (P') from the first server (S1),
- loading the security parameter (R),
- calculating the second cryptogram (H') by the one-way function on the current identifier (U'), the current password (P') and the security parameter (R),
- returning the second cryptogram (H') to the first server (S1).
